# FASCICULE DE BREVET EUROPEEN

(11) **EP 2 594 391 B1**
(45) Date de publication et mention de la délivrance du brevet: **03.01.2018**
(21) Numéro de dépôt: 12007528.8
(22) Date de dépôt: 06.11.2012
(51) Int. Cl.: B29C 73/32, B29C 73/34, B29C 35/04

(54) **Appareil de chauffage localisé d'une surface à réparer en matériau polymère, par ventilation d'un fluide chaud à l'intérieur d'une chambre de confinement**
Gerät zum lokalisierten Beheizen einer zu reparierenden Oberfläche aus Polymermaterial durch Ventilation eines heißen Fluids im Innern einer Isolierkammer
Apparatus for localised heating of a polymer surface to be repaired, by ventilating a hot fluid inside a containment chamber

(30) Priorité: 17.11.2011 FR 1103494
(43) Date de publication de la demande: 22.05.2013
(73) Titulaire: Airbus Helicopters, 13725 Marignane Cedex (FR)
(72) Inventeur: Giraud, Kevin, 13300 Salon DE Provence (FR); Capelle, Nicolas, 13090 AIX EN Provence (FR)
(74) Mandataire: GPI & Associés

(56) Documents cités:
- EP-A1- 2 371 523
- WO-A1-2008/119114
- DE-U1-202009 007 118
- FR-A1- 2 950 079
- US-A- 4 652 319

## Description

La présente invention est du domaine du façonnage des matières plastiques, et plus particulièrement du domaine des appareils agencés pour réparer localement une surface en matériau polymère organique. La présente invention relève plus spécifiquement des appareils pour chauffer localement une surface en matériau polymère, par confinement d'une zone à traiter et chauffage de cette zone à traiter par ventilation d'un fluide chaud, air ou vapeur d'eau notamment.

La présente invention a pour objet un tel appareil de chauffage localisé d'une surface à réparer en matériau polymère, comportant une coiffe déformable ménageant une chambre de confinement de la zone à traiter et des moyens de ventilation du fluide chaud à l'intérieur de la chambre de confinement.

Dans le domaine du façonnage des matières plastiques, il est connu d'effectuer au moyen d'un appareil transportable une réparation localisée d'une surface en matériau polymère, matériau polymère organique notamment. L'appareil comporte une chambre de confinement d'une zone à traiter de la surface à réparer, et des moyens de ventilation d'un fluide chaud à l'intérieur de la chambre pour porter à température la zone à traiter. De tels appareils sont avantageusement aisément transportables pour permettre leur amenée vers une structure de volume important, dont une surface à réparer est à traiter localement sur une zone d'étendue restreinte.

Il est plus particulièrement connu de tels appareils selon lesquels la chambre de confinement est ménagée par une coiffe déformable délimitant un débouché de la chambre de confinement vers l'extérieur de la coiffe. La chambre de confinement forme un volume d'interposition entre la zone à traiter et la coiffe dont le débouché est destiné à être appliqué autour de la zone à traiter.

On pourra par exemple se reporter aux documents US4652319 (HAMMOND R.E.) et WO2008119114 (IND COMPOSITES ENGINEERING et al.) qui décrivent de tels appareils.

Un problème général à résoudre réside dans l'agencement de la coiffe. Un compromis doit être trouvé entre plusieurs difficultés à surmonter et/ou avantages à procurer.

Une échappée du fluide chaud ventilé à l'intérieur de la chambre de confinement doit être évitée, pour limiter les déperditions d'énergie lors du chauffage de la zone à traiter et pour obtenir un maintien homogène de la chambre de confinement à une température adaptée. La surface à réparer est susceptible d'être de forme complexe, ce qui rend délicat l'installation de la coiffe en contact périphérique à son débouché le long du pourtour de la zone à traiter. Une adaptation de forme du débouché de la coiffe selon la forme de la surface à réparer doit procurer un confinement satisfaisant de la zone à traiter. Le caractère déformable du débouché de la coiffe doit autoriser une variation aisée de la géométrie de la chambre de confinement à son débouché, la périphérie du dit débouché devant épouser au mieux la forme du pourtour de la zone à traiter.

Pour un volume donné de la chambre de confinement, il est opportun que le caractère déformable de la coiffe permette son adaptation aisée à la forme du pourtour de la zone à traiter, quelle que soit la conformation de la surface à réparer. Il est recherché d'optimiser la rentabilité de l'appareil, à partir d'une organisation de la coiffe permettant son obtention à moindres coûts et procurant une faculté d'exploitation optimisée de cette coiffe pour une quelconque surface à réparer.

Il est aussi opportun de mettre à profit le caractère déformable de la coiffe pour faciliter la maniabilité, le transport et le rangement de l'appareil. L'installation et le retrait de la coiffe vis-à-vis de la surface à réparer doivent être obtenus les plus rapides et aisés à mettre à oeuvre possibles.

Il est avantageux que la chambre soit thermiquement isolée, pour éviter les déperditions d'énergie par transfert thermique entre l'environnement extérieur et la chambre de confinement. La conformation globale de la coiffe, délimitant le volume de la chambre de confinement, doit permettre une ventilation homogène de la chambre de confinement. Il est opportun que les modalités d'isolation thermique de la chambre de confinement ne fassent pas obstacle à sa déformabilité, notamment au regard de la faculté offerte d'un rangement et d'un transport aisé de l'appareil et plus particulièrement de la coiffe. L'isolation thermique de la chambre de confinement doit être obtenue efficace en limitant les coûts d'obtention de l'appareil.

Selon US4652319 et WO2008119114, les moyens de ventilation sont exploités pour adapter la conformation de la coiffe selon la surface à réparer.

Par exemple selon US4652319, la coiffe comporte une cloche rigide porteuse en périphérie de son débouché d'une jupe agencée en soufflet. La jupe ménage un débouché déformable de la coiffe appliquée sur la surface à réparer. Le débouché de la coiffe est plaqué contre la surface à réparer, en périphérie de la zone à traiter, par mise sous dépression de la chambre de confinement. Une telle mise en dépression induit une déformation de la coiffe suivant son axe d'élévation, entre une station de repos dans laquelle le développement de la coiffe est optimisé en élévation, et une station de travail dans laquelle la coiffe est ramassée par compression du soufflet.

Par exemple encore selon WO2008119114, la coiffe est formée de deux couches déformables assemblées l'une à l'autre. Une première couche globalement plane est destinée à être appliquée contre la surface à réparer, en périphérie de la zone à traiter. Une deuxième couche, délimitant le volume de la chambre de confinement, est fixée par scellement en périphérie de la première couche et est mise en conformation par ventilation du fluide chaud circulant entre les deux couches.

La présente invention a pour objet de proposer un appareil de chauffage localisé d'une surface à réparer en matériau polymère, matériau polymère organique notamment. L'appareil est plus spécifiquement du type comprenant une coiffe déformable ménageant une chambre de confinement d'une zone à traiter de la surface à réparer, et des moyens de ventilation d'un fluide chaud, air ou vapeur d'eau par exemple, à l'intérieur de la chambre de confinement.

Il a aussi été proposé par le document EP 2 371 523 (ALIENA AERONAUTICA SPA), un appareil pour chauffer localement une surface à réparer en matériau polymère potentiellement de forme complexe. Il est plus particulièrement proposé par ce document de confiner une couche chauffante entre la surface à réparer et une membrane maintenue plaquée contre la surface à réparer. Le plaquage de la membrane est opéré à partir d'une mise sous dépression de l'espace compris entre la membrane et la surface à réparer, et à partir d'une poussée exercée contre la membrane par de l'air admis sous pression dans une chambre placée en surplomb de la membrane. La chambre est ménagée par un corps concave dont un débouché est obturé par la membrane. Le corps concave est conformé en dôme, en étant formé d'une paroi en résine à l'intérieur de laquelle paroi est noyée une armature de renfort maintenant le corps concave en conformation, à l'encontre de la poussée exercée sur la paroi par l'air admis sous pression à l'intérieur de la chambre.

Le document FR 2 950 079 (AIRCELLE SA) propose un appareil selon le préambule de la revendication 1. Le but de la présente invention est de proposer un tel appareil, comportant une coiffe dont l'organisation procure un compromis satisfaisant au regard des contraintes et avantages à procurer précédemment énoncés.

L'appareil de la présente invention est un appareil de chauffage localisé d'une surface à réparer en matériau polymère, matériau polymère organique notamment. Le chauffage est effectué par ventilation d'un fluide chaud à l'intérieur d'une chambre de confinement d'une zone à traiter que comprend l'appareil. Le fluide est par exemple de l'air chaud ou de la vapeur d'eau, ou tout autre fluide adapté à porter à température souhaitée pendant une durée déterminée une zone à traiter de la surface à réparer.

L'appareil comprend au moins une coiffe déformable délimitant la chambre de confinement, en ménageant au moins un débouché de la chambre de confinement vers l'extérieur de la coiffe. La coiffe est destinée à être placée en surplomb de la zone à traiter en ménageant la chambre de confinement, dont le débouché est disposé autour de la zone à traiter.

La coiffe est un organe délimitant un volume autour de la zone à traiter, une mise en communication aéraulique entre la zone à traiter et ledit volume étant procurée à travers le débouché de la chambre de confinement vers l'extérieur de la coiffe. Le volume délimité par la coiffe correspond à la chambre de confinement, qui s'étend suivant un axe général d'élévation transversal, perpendiculaire notamment, à un plan général d'extension de son débouché en station de repos de la coiffe.

La coiffe est en communication aéraulique avec une source de ventilation du fluide porté à température, notamment par l'intermédiaire d'un premier circuit aéraulique. Une telle communication aéraulique est susceptible d'être procurée à partir de moyens spécifiques de raccordement de la coiffe avec le premier circuit aéraulique. Une déformabilité de la coiffe au débouché de la chambre de confinement est susceptible d'être mise à profit pour ménager un passage d'un conduit que comprend le premier circuit aéraulique, depuis l'extérieur vers l'intérieur de la chambre de confinement.

La coiffe est déformable entre deux stations. La déformabilité de la coiffe est à considérer au regard d'une variation de sa géométrie lorsqu'elle est soumise à contrainte, et plus particulièrement au regard d'une variation de géométrie recherchée du débouché de la chambre de confinement vers l'extérieur. De telles variations de géométrie sous contrainte de la coiffe confèrent une déformabilité du dit débouché en application contre la surface à réparer, et plus particulièrement en application le long du pourtour de la zone à traiter.

La déformabilité du débouché procure à la coiffe la faculté d'épouser le pourtour de la zone à traiter, notamment dans le cas où un tel pourtour est de forme complexe et/ou à variation de géométrie au regard d'un plan général d'extension de la surface à réparer, et plus particulièrement de la zone à traiter. La forme complexe du pourtour de la zone à traiter est à considérer comme présentant des variations de forme au regard d'un plan transversal à l'axe d'élévation de la chambre de confinement.

Les deux dites stations de la coiffe correspondent respectivement à une station de repos et à une station de travail.

La station de repos de la coiffe est une station naturelle dans laquelle la coiffe est de conformation spontanée. La notion de naturelle est à considérer comme l'état intrinsèque d'un corps, et notamment un état du corps hors application de contraintes extérieures, à l'exception le cas échéant de la gravité.

La station de travail de la coiffe correspond à un état de la coiffe dans laquelle la coiffe délimite le volume de la chambre de confinement. En station de travail, la coiffe est placée sous contrainte à partir de la mise en oeuvre sélective de moyens générateurs d'effort que comprend l'appareil. La mise en oeuvre des moyens générateurs d'effort est sélectivement effectuée par un opérateur, par l'intermédiaire de moyens de commande notamment, entre un état inactif et un état d'activation des moyens générateurs d'effort. A l'état inactif, les moyens générateurs d'effort ne sont pas générateurs du dit effort ; inversement à l'état d'activation, les moyens générateurs d'effort sont générateurs du dit effort.

L'appareil de la présente invention est principalement reconnaissable en ce que la coiffe est formée d'une bâche globalement plane intégrant dans son plan général une ossature de mise en conformation de la chambre de confinement. La bâche est déformable par l'ossature entre un état naturel et un état de déformation de la bâche. A l'état naturel la bâche est plane ; à l'état de déformation, la bâche est déformée par l'ossature dans son plan général en induisant la mise en conformation de la chambre de confinement, sous l'effet de tensions appliquées localement par l'ossature sur la bâche dans son plan général.

L'ossature est à changement d'état entre un état passif et un état actif. A l'état passif, la bâche et l'ossature qu'elle intègre sont spontanément plans à l'état naturel. A l'état actif, l'ossature est soumise à déformation par les dits moyens générateurs d'effort et applique lesdites tensions localisées sur la bâche.

L'ossature constitue un organe intermédiaire entre la bâche formant la coiffe, et les moyens générateurs d'efforts exploités pour placer la coiffe en station de travail. Une mise sous contrainte de l'ossature par les moyens générateurs d'effort est localement transférée localement par l'ossature sur la bâche, en induisant une déformation globale de la bâche dans son plan général. La déformation globale de la bâche provoque une mise en conformation de la chambre de confinement, depuis un état naturellement plan de la coiffe en station de repos vers un état développé en volume suivant l'axe d'élévation de la coiffe en station de travail. La déformation globale de la bâche en station de travail de la coiffe est induite indirectement par l'intermédiaire de l'ossature soumise à contrainte par les moyens générateurs d'effort.

La bâche est notamment formée d'une pièce de toile étanche ou analogue comprenant au moins une couche. La bâche est susceptible de comporter plusieurs couches solidaires entre elles en superposition en étant issues de toiles élémentaires respectives globalement planes. Les dites toiles élémentaires superposées composent la pièce de toile, une déformation de la bâche sur elle-même entraînant une déformation concomitante des couches qui la composent. Une telle déformation correspond notamment à la mise en conformation de la chambre de confinement, à partir du passage de la bâche d'un état plan naturel en station de repos de la coiffe, vers un état de déformation en station de travail de la coiffe dans laquelle la chambre de confinement est mise en conformation.

Une déformation de la bâche est encore susceptible de correspondre à un repli sur elle-même et/ou un roulage de la bâche en vue de son transport et/ou de son rangement. La faculté de la bâche à être en un état plan et souple en station de repos de la coiffe, autorise de tels replis et roulage de la coiffe à l'état de repos.

Les dites couches sont par exemple des pièces élémentaires de toile formant des nappes jointes entre elles en superposition. Les dites couches sont susceptibles de procurer des fonctions respectives, telles qu'une couche d'isolation thermique et/ou une couche de réflexion thermique. Les couches sont le cas échéant à considérer comme formant un tout composant la bâche par liaison solidaire en superposition des couches entre elles, les couches étant conjointement déformables dans leur plan général sous l'effet d'une déformation de la bâche.

La pièce de toile confère à la bâche son caractère plan et déformable dans son plan général. La coiffe est formée de la bâche intégrant l'ossature dans son plan général, la bâche et l'ossature qu'elle intègre étant déformables entre l'état naturel globalement plan de la bâche et de l'ossature qu'elle intègre, et l'état de déformation de la bâche sous l'effet de contraintes appliquées localement dans son plan général par l'intermédiaire de l'ossature soumise à contrainte par les moyens générateurs d'effort, pour mettre la chambre de confinement en conformation.

L'ossature est intégrée à la bâche en s'étendant en travers du plan général de la bâche à l'état naturel, tel que défini par les deux directions concourantes de l'espace euclidien suivant lesquelles la bâche s'étend principalement.

Il est notamment à considérer par intégration une liaison solidaire entre l'ossature à la bâche dans son plan général, l'ossature s'étendant dans le plan général de la bâche suivant les deux directions définissant le plan général de la bâche. L'intégration de l'ossature à la bâche induit une mise en prise entre elles, en des zones d'ancrage de l'ossature sur la bâche qui sont réparties dans le plan général de la bâche. Les dites tensions localisées sont appliquées par l'ossature sur la bâche dans son plan général par l'intermédiaire des zones d'ancrage.

La structure de la coiffe est simple et peu coûteuse, en étant réduite à la bâche intégrant l'ossature.

Pour un périmètre donné de la bâche, la coiffe est susceptible de s'adapter selon les besoins à la formation d'une chambre de confinement autour de zones à traiter de diverses formes et dimensions. Le débouché de la chambre de confinement est propre à s'adapter aisément à une quelconque forme de la surface à réparer. La mise en conformation de la chambre de confinement par application des dites tensions localisées sur la bâche par l'ossature, autorise une libre déformation du débouché de la chambre de confinement en réaction de l'appui que prend la bâche contre la surface à réparer en bordure du débouché. La liberté de déformation du débouché est procurée suivant les trois dimensions de l'espace euclidien.

Le débouché de la chambre de confinement est délimité par le bord de la bâche, le cas échéant replié sur lui même par un opérateur pour ajuster au mieux la géométrie du débouché de la chambre de confinement en fonction d'une géométrie spécifique du pourtour de la zone à traiter.

La coiffe est facilement transportable et peut être rangée dans un espace restreint, par repli de la bâche sur elle-même voire par analogie par roulage.

La bâche peut être facilement équipé d'organes de raccordement aéraulique, pour la mise en communication entre la source génératrice du fluide chaud, voire encore tel que visé plus loin pour la mise en relation entre l'ossature et une source génératrice de dépression.

La conformation et l'étendue de l'ossature dans le plan général de la bâche déterminent la conformation de la chambre de confinement formée par la bâche soumise à déformation par les dites tensions localisées. La conformation et l'étendue de l'ossature peuvent être aisément adaptées selon une quelconque conformation souhaitée d'une chambre de confinement à obtenir.

L'intégration de l'ossature à une bâche permet de réduire aisément le volume de la chambre de confinement à ce qui est juste nécessaire, pour limiter le volume de fluide chaud à exploiter. Pour une même ossature, le volume de la chambre de confinement peut être ajusté selon la force développée par les dites tensions appliquées par l'ossature sur la bâche. Un ajustement de la force développée par lesdites tensions est susceptible d'être procuré par réglage des moyens générateurs d'effort. L'élévation de la chambre de confinement peut largement varier selon les besoins depuis une valeur faible correspondant à une déformation de la bâche proche de son état naturel, jusqu'à une élévation optimisée de la chambre de confinement.

L'ossature est plus particulièrement souple à l'état passif et est rigidifiée à l'état actif par les moyens générateurs d'efforts qui induisent un changement de forme de l'ossature entre son état passif et son état actif. Le changement de forme de l'ossature est induit au regard au moins de son plan général d'extension à l'état passif, qui correspond à son état naturel. Le plan général d'extension de l'ossature à l'état passif correspond au plan général de la bâche à l'état naturel.

Le changement de forme de l'ossature induit par les moyens générateurs d'effort est avantageusement progressif entre l'état passif et un état actif optimal dans lequel l'ossature est rigide. Il est à considérer par rigide un état de l'ossature selon lequel l'ossature est spontanément indéformable, au moins au regard de l'effet induit par la gravité sur le maintien naturel en conformation de l'ossature, voire notamment encore au regard des efforts induits par la ventilation du fluide chaud à l'intérieur de la coiffe.

Selon un état intermédiaire de l'ossature entre l'état passif et l'état actif optimal, l'ossature est semi rigide et malléable. A l'état intermédiaire, l'ossature présente une tenue naturelle suivant une quelconque inflexion dans son plan général d'extension considéré à l'état passif de l'ossature.

Pour une bâche de surface et/ou de géométrie données, diverses inflexions de l'ossature sont susceptibles d'être opérées par un opérateur à l'état intermédiaire de l'ossature. De telles inflexions de l'ossature permettent à un opérateur d'adapter la conformation de l'ossature selon les besoins, et plus spécifiquement d'adapter la conformation de la chambre de confinement en fonction de la zone à traiter, tant au regard du volume global de la chambre de confinement qu'au regard de la mise en conformation spécifique de son débouché.

Selon une forme de réalisation, l'ossature est logée à l'intérieur d'au moins une poche fermée ménagée dans la bâche. L'ossature est formée d'au moins un élément de tension issu d'un corps en matériau alvéolaire à cellules ouvertes communicantes. Les moyens générateurs d'efforts sont formés de moyens générateurs d'une dépression à l'intérieur de la poche.

L'élément de tension est notamment de conformation allongée, pour appliquer localement les dites tensions localisées sur la bâche selon l'orientation et la conformation de l'élément allongé en travers de la bâche. La mise en dépression de la poche et de l'élément de tension provoque la rigidification de l'ossature par tassement sur elle-même, sous l'effet d'une compression des cellules que comporte le matériau dont est issu l'élément de tension.

L'appareil comprend un deuxième circuit aéraulique affecté à la mise en dépression de la poche logeant l'ossature. La poche est susceptible d'être équipée d'une valve ou organe analogue de raccordement de la bâche avec le deuxième circuit aéraulique, pour autoriser une séparation entre la bâche et la source génératrice de dépression. Les moyens générateurs d'effort sont de structure simple, peu coûteuse, sont fiables et sont aisément transportables et exploitables pour diverses coiffes d'appareils respectifs. Le deuxième circuit aéraulique est distinct de la bâche en occupant un volume extérieur à la chambre de confinement. Un encombrement du volume intérieur de la chambre de confinement est évité, et une séparation entre la bâche et la source génératrice de dépression est autorisée.

La structure de l'ossature est simple et peu coûteuse, et la conformation de l'ossature est facilement adaptable selon la taille et l'orientation dans le plan général de la bâche d'un ou de plusieurs éléments de tension dont elle est composée. La chambre de confinement peut être rapidement mise en conformation selon les besoins. La conformation de la chambre de confinement est susceptible d'être adaptée sur site en exploitant le caractère malléable de l'ossature au fur et à mesure de son tassement sous l'effet de la dépression progressivement effectuée à l'intérieur de la poche.

Par exemple, des extrémités de l'ossature sont susceptibles d'être volontairement déformées par un opérateur à un état intermédiaire de l'ossature, pour être appliquée contre la surface à réparer en bordure de la zone à traiter. La conformation de la chambre de confinement est aisément adaptable selon les besoins pour une géométrie donnée de la bâche dans son plan général. Une telle adaptation est avantageuse pour adapter la conformation de la chambre de confinement selon la géométrie de la zone à traiter, et selon une réduction avantageuse du volume de la chambre de confinement pour limiter le volume de fluide chaud à exploiter pour une réparation donnée de la surface à réparer. La conformation du débouché de la chambre de confinement est aisément adaptée selon la géométrie du pourtour de la zone à traiter potentiellement quelconque, à partir de la déformation localisée de l'ossature effectuée par un opérateur à l'état intermédiaire de rigidification de l'ossature.

La bâche est susceptible de comporter une pluralité de poches, dont les exploitations respectives pour la réception d'un élément de tension sont susceptibles d'être choisies par un opérateur en fonction des besoins, et plus particulièrement selon l'agencement de la zone à traiter. Par exemple, l'organisation globale de l'ossature est susceptible d'être formée sur site par un opérateur, à partir de l'exploitation de divers éléments de tension sélectivement logés à l'intérieur d'une ou de plusieurs poches choisies par l'opérateur.

Une même bâche est susceptible d'être exploitée pour des zones à traiter de conformation différentes, en ajustant la conformation et le volume de la chambre de confinement à ce qui est juste nécessaire selon l'agencement de la zone à traiter. Un tel ajustement de conformation et de volume de la chambre de confinement est susceptible d'être réalisé à partir d'une exploitation sélective des poches que comporte la bâche, et/ou à partir du caractère malléable de l'ossature à un état intermédiaire selon la dépression progressivement générée à l'intérieur de la ou des poches par la source génératrice de dépression.

L'élément de tension est par exemple formé d'une bande issue d'un feutre dont les fibres ménagent entre elles les dites cellules. L'ossature formée à partir d'une ou de plusieurs de telles bandes est peu coûteuse, et peut être aisément organisée selon les besoins.

L'ossature est notamment formée d'une pluralité d'éléments de tension allongés concourants qui s'étendent chacun en travers de la bâche entre au moins deux de ses bords opposés. Les éléments de tension allongés composant l'ossature sont susceptibles d'être logés dans une poche commune, ou d'être logés dans des poches qui leurs sont respectivement affectés individuellement ou par groupe d'éléments de tension. Une conformation désirée de l'ossature est aisément obtenue à partir des bandes de feutre dont sont issus les éléments de tension.

Selon une forme avantageuse de réalisation permettant de former les poches à moindres coûts, la bâche est au moins composée de deux nappes fixées l'une à l'autre en superposition dans leur plan général. Les nappes sont fixées l'une à l'autre par l'intermédiaire de joints de fixation des nappes entre elles, les dits joints de fixation ménageant les poches entre eux et entre les nappes.

De tels joints de fixation sont notamment formés par scellement des nappes entre elles, tels que par collage ou de préférence par thermo-soudage.

Dans le cas où il est recherché d'autoriser une organisation sur site de l'ossature, les poches sont susceptibles de comporter une ouverture débouchant en bordure de bâche, pour autoriser l'introduction ou inversement le retrait d'au moins un élément de tension. La dite ouverture est potentiellement facilement munie de moyens d'obturation sélective, pour permettre sa clôture autorisant la mise sous dépression de la poche. De tels moyens d'obturation sont susceptibles d'être formés par des moyens de liaison facilement réversible des nappes entre elles. De tels moyens de liaison facilement réversible sont par exemple formés d'une fermeture à glissière, de bandes à boucles et griffes auto-agrippant, voire encore par une colle repositionnable ou analogue.

Les nappes sont susceptibles d'être avantageusement issues d'un même matériau ou de matériau respectifs. Par exemple, l'une des nappes ménage une face interne de la chambre de confinement. Une nappe interne de la bâche est susceptible d'être issue d'un matériau thermiquement réfléchissant, et/ou d'être munie d'une couche spécifique thermiquement réfléchissante, telle que formée d'une feuille métallique. L'autre nappe ménage une face externe de la chambre de confinement, et est susceptible d'être issue d'un matériau thermiquement isolant et/ou d'être munie d'une couche spécifique thermiquement isolante.

La face interne de la chambre de confinement correspond à une surface de l'une au moins des grandes faces de la bâche destinée à être orientée vers la zone à traiter en station de travail de la coiffe. La face externe de la chambre de confinement correspond à une surface de l'une au moins des grandes faces de la bâche destinée à être orientée vers l'extérieur de la coiffe en station de travail.

La bâche est de préférence pourvue d'une isolation thermique de l'une à l'autre de ses grandes faces définies par le plan général de la bâche. Une telle isolation thermique forme un écran thermique entre la chambre de confinement et l'environnement extérieur de la coiffe, pour éviter les déperditions d'énergie fournie par le fluide chaud.

Selon diverses formes de réalisation prises isolément ou en combinaison, l'isolation thermique est susceptible de comprendre :
-) au moins une couche souple de matériau isolant flexible intégrée à l'une quelconque au moins des grandes faces de la bâche. La couche de matériau isolant est susceptible d'être avantageusement formée par la nappe ménageant la face externe de la bâche, ou par une couche spécifique de couverture de la bâche à sa face externe. La couche de matériau isolant est susceptible d'être fixée en superposition sur la nappe correspondante considérée comme externe au regard de la face externe de la bâche.
-) au moins un corps issu d'un matériau isolant et logé à l'intérieur d'au moins une alvéole que comporte la bâche. Une telle alvéole est avantageusement ménagée entre les deux dites nappes, en bordure de la poche. Le corps est susceptible d'être logé amovible à l'intérieur de l'alvéole, pour limiter le volume de la bâche repliée sur elle-même ou roulée pour son transport et son rangement. Le corps est encore susceptible d'être fixé à la bâche, par scellement notamment, tel que par collage. Le corps est par exemple encore d'être formé d'un granulat logé à l'intérieur de l'alvéole.
-) au moins une enceinte fermée ménagée entre les deux dites nappes et entre des dits joints de fixation. L'une des nappes comporte des évents débouchant à une grande face de la bâche. L'enceinte est en communication aéraulique avec ladite source de ventilation du fluide chaud, et plus particulièrement avec le premier circuit aéraulique. Une telle communication aéraulique est susceptible d'être effectuée par l'intermédiaire d'un circuit de dérivation que comporte le premier circuit aéraulique. Une telle communication aéraulique est encore susceptible d'être effectuée par une admission totale du fluide chaud à partir du premier circuit aéraulique, l'admission du fluide chaud à l'intérieur de la chambre de confinement étant réalisée à partir du volume intérieur de la bâche, et plus particulièrement par l'intermédiaire de l'alvéole.

La bâche est de préférence pourvue à l'une de ses grandes faces d'une couche thermiquement réfléchissante. La couche thermiquement réfléchissante est susceptible d'être avantageusement formée par la nappe formant la face interne de la bâche, ou par une couche spécifique de couverture de la bâche à sa face interne. La couche thermiquement réfléchissante est susceptible d'être fixée en superposition sur la nappe correspondante considérée comme interne au regard de la face interne de la bâche, en étant par exemple formée d'une feuille de métal ou par analogie une feuille métallisée.

Selon sa géométrie, la bâche est susceptible de comporter au moins une jupe de prolongement de l'un au moins de ses bords. L'ossature est intégrée à la bâche dans une zone médiane de la bâche délimitant le volume de la chambre de confinement. La jupe prolonge ladite zone médiane en fermant la chambre de confinement autour de son débouché à l'état actif de l'ossature. La jupe forme une zone périphérique de la bâche susceptible d'être exempte d'ossature. La jupe peut aisément selon les besoins être pourvue d'une ossature spécifique dans son plan général.

La jupe est par exemple intégrée à la bâche, en bordant au moins un bord de la zone médiane.

La jupe est de préférence montée amovible sur la bâche, en étant rapportée en bordure de la zone médiane de la bâche par l'intermédiaire de moyens d'assemblage facilement réversible. De tels moyens d'assemblage facilement réversible sont par exemple formés d'une fermeture à glissière, de bandes à boucles et griffes auto-agrippant, voire encore par une colle repositionnable ou analogue.

La bâche est accessoirement munie de moyens de fixation à liaison facilement réversible ménagés au moins à sa périphérie susceptible de correspondre au débouché de la chambre de confinement. Les moyens de fixation sont aptes à procurer une jonction étanche entre la bâche et la surface à réparer. De tels moyens de fixation à liaison facilement réversible sont par exemple formés de bandes à boucles et griffes auto-agrippant, l'une des bandes étant attachée à la surface à réparer le long du pourtour de la zone à traiter, par l'intermédiaire d'une face adhésive notamment. Les moyens de fixation à liaison facilement réversible sont par exemple encore formés d'une colle repositionnable ou analogue, susceptible d'être apposée sur site par un opérateur. La bâche peut être enduite localement sur site de colle repositionnable par un opérateur, en des zones souhaitées selon la conformation spécifique du débouché de la chambre de confinement.

Selon une forme de réalisation, l'appareil est apte à être facilement composé d'une pluralité de modules, chacun formés d'une coiffe. Les bâches formant respectivement les coiffes que comprennent individuellement les modules, sont équipées de moyens de jonction aéraulique entre elles. Les moyens de jonction aéraulique sont par exemple formés de conduits et/ou de valves intégrés à la bâche et munis de moyens de raccordement de l'un à l'autre des conduits et/ou valves que comportent respectivement les modules.

De tels moyens de jonction aéraulique comprennent notamment au moins des premiers moyens de jonction aéraulique à travers lesquels circule l'air de l'une à l'autre des poches que comportent les bâches formant les coiffes respectives des modules. Une telle circulation d'air est notamment induite par une source génératrice de dépression commune aux différents modules.

Les moyens de jonction aéraulique sont encore susceptibles de comprendre des deuxièmes moyens de jonction aéraulique à travers lesquels circule le fluide chaud de l'un à l'autre des modules.

Il est mis à profit le caractère préférentiellement amovible des jupes que comportent les bâches de modules respectifs, pour mettre en communication aéraulique entre elles, au regard de la circulation du fluide chaud, les différentes chambres de confinement de l'un à l'autre des modules. Les coiffes de deux modules voisins sont aboutées après retrait des jupes correspondantes que comportent les bâches formant ces coiffes, les chambres de confinement que comportent respectivement les modules étant mises en communication aéraulique entre elles à travers les ouvertures latérales des coiffes libérées des jupes correspondantes.

Des exemples de réalisation de la présente invention vont être décrits en relation avec les figures des planches annexées, dans lesquelles :
- La fig.1 est une illustration schématique en perspective d'un exemple de réalisation d'un appareil de la présente invention.
- La fig.2 est une illustration schématique vue en plan d'un exemple de réalisation d'une bâche à partir de laquelle est formée une coiffe que comprend l'appareil représenté sur la fig.1.
- La fig.3 est une illustration schématique en perspective d'une coiffe que comprend l'appareil représenté sur la fig.1, la coiffe illustrée étant formée à partir de la bâche représentée sur la fig.2, en étant de conformation différente de celle représentée sur la fig.1.

- Les fig.4 à fig.6 sont des illustrations schématiques partielles en tranche de différents exemples de réalisation de la structure d'une bâche représentée sur la fig.2, considérée au regard de son épaisseur.
- La fig.7 est une illustration schématique d'un exemple de réalisation d'un appareil de la présente invention, comprenant plusieurs coiffes aboutées entre elles.

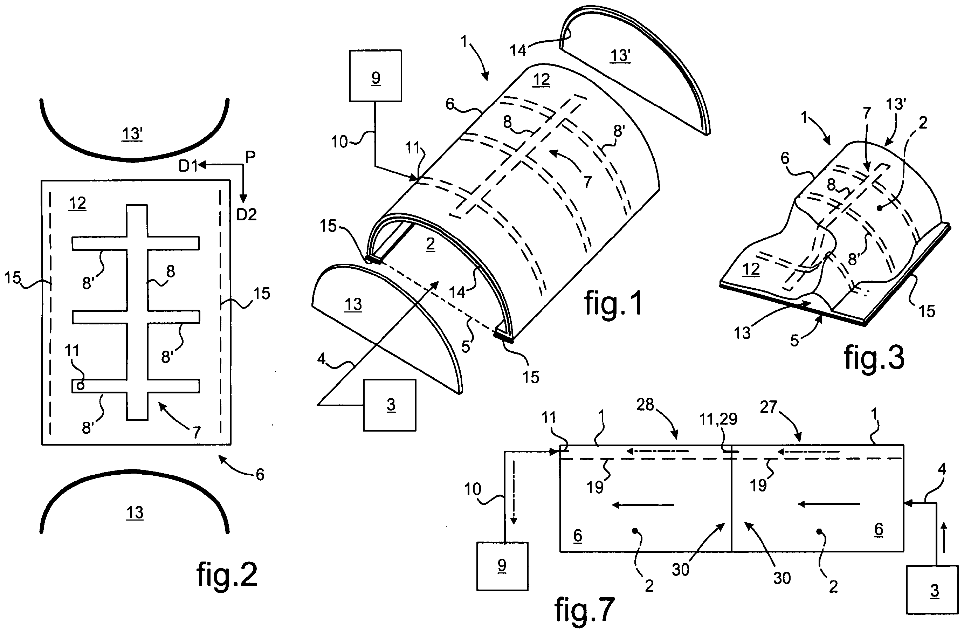

Sur la fig.1, un appareil de chauffage est destiné à réparer une surface en matériau polymère organique. L'appareil comprend une coiffe 1 qui délimite une chambre de confinement 2 d'une zone à traiter de la surface à réparer. La coiffe 1 est en communication aéraulique avec une source de ventilation 3 d'un fluide chaud, pour chauffer la zone à traiter. Le fluide chaud est admis à l'intérieur de la chambre de confinement 2 par l'intermédiaire d'un premier circuit aéraulique 4.

La coiffe 1 délimite la chambre de confinement 2, en ménageant un débouché 5 de la chambre de confinement 2 prévu pour entourer la zone à traiter. Le débouché 5 est délimité par un bord libre de la coiffe 1, le dit bord libre ménageant une ouverture vers l'extérieur de la chambre de confinement 2. Pour procurer une installation étanche de la coiffe 1 sur la surface à réparer, la coiffe 1 est déformable de sorte que le débouché 5 de la chambre de confinement 2 soit apte à épouser la conformation du pourtour de la zone à traiter. La déformabilité de la coiffe 1 autorise une déformation spontanée du débouché 5 de la chambre de confinement 2 le long du pourtour de la zone à traiter, en fonction des variations de reliefs de la surface à réparer.

Sur les fig.1, fig.2 et fig.3, la déformabilité de la coiffe 1 est optimisée, pour non seulement procurer la mise en conformation spontanée du débouché 5 de la chambre de confinement 2 autour de la zone à traiter, mais aussi pour provoquer le passage de la coiffe 1 entre une station de repos et une station de travail. En station de repos de la coiffe 1, telle qu'illustrée sur la fig.2, la coiffe 1 est placée en conformation globalement plane et souple à l'état naturel. En station de travail, telle qu'illustrée sur la fig.1, la coiffe 1 délimite une chambre de confinement 2 apte à surplomber une zone à traiter.

La coiffe 1 est formée d'une bâche 6 intégrant dans son plan général une ossature 7 de mise en conformation de la bâche 6 en station de travail de la coiffe 1. L'ossature 7 s'étend dans le plan général de la bâche 6, en étant composée d'éléments de tension 8, 8' qui sont individuellement orientés suivant l'une des directions D1, D2 d'extension de la bâche 6 dans son plan général P.

En station de repos illustrée sur la fig.2, la coiffe s'étend dans un plan correspondant au plan général de la bâche 6. L'ossature 7 s'étend globalement en travers de la bâche 6 suivant les deux directions D1, D2 définissant le plan général de la bâche 6.

Sur la fig.1, l'ossature 7 est composée d'un ou de plusieurs éléments de tension 8 issus d'une bande de feutre, et est en communication aéraulique avec une source génératrice de dépression 9 par l'intermédiaire d'un deuxième circuit aéraulique 10. Une mise sous dépression des éléments de tension 8 provoque un tassement des bandes de feutre à partir desquelles sont issus les éléments de tension 8, avec pour effet de provoquer un durcissement progressif de l'ossature 7. La bâche 6 est munie d'une valve 11 de raccordement à la source génératrice de dépression 9, et plus particulièrement au deuxième circuit aéraulique 10. La valve 11 permet de mettre en communication fluidique la source génératrice de dépression 9 avec au moins une poche que comporte la bâche 6 et qui loge l'ossature 7.

Le volume intérieur de la chambre de confinement 2 est libéré de tout organe aéraulique, conduit notamment, participant de l'un et/ou l'autre du premier circuit aéraulique 4 et du deuxième circuit aéraulique 10.

Sur les exemples de réalisation respectivement illustrés sur la fig.1 et la fig.3, la chambre de confinement 2 formée par déformation de la bâche 6 dans son plan général, est agencée en tunnel de forme globale hémisphérique. L'ossature 7 comporte plusieurs éléments de tension 8, 8' dont au moins un élément de tension principal 8 et au moins un élément de tension secondaire 8'.

Plus spécifiquement, un élément de tension principal 8 s'étend le long d'une génératrice du tunnel. Des éléments de tension secondaires 8' s'étendent transversalement, perpendiculairement notamment, à l'élément de tension principal 8, en s'étendant le long de cordes respectives du tunnel. Selon la conformation à obtenir de la chambre de confinement 2, la conformation de l'ossature 7 est organisée en étant composée de divers éléments de tension 8, 8' spécifiquement disposés et étendus dans le plan général P de la bâche 6 illustrée sur la fig.2 en station de repos de la coiffe 1.

La bâche 6 et l'ossature 7 qu'elle intègre sont souples et déformables à l'état naturel. L'ossature 7 est apte à être progressivement rigidifiée, pour appliquer des tensions localisées sur la bâche 6 dans son plan général P. Les tensions sont appliquées par l'ossature 7 localement sur la bâche 6 par l'intermédiaire des éléments de tension 8, 8' composant l'ossature 7. Les dites tensions localisées induisent la déformation de la bâche 6 sur elle-même dans son plan général P pour former la chambre de confinement 2 et la maintenir en conformation.

Sur la fig.2, la bâche 6 comporte une zone médiane 12 à l'intérieur de laquelle est intégrée l'ossature 7. La zone médiane 12 est bordée par au moins une jupe 13, 13' que comprend la bâche 6. La ou les jupes 13, 13' forment des prolongements de la zone médiane 12 en station de travail de la coiffe 1. Sur l'exemple de réalisation illustré, les jupes 13, 13' sont montées amovibles sur la zone médiane 12 par l'intermédiaire de moyens d'assemblage facilement réversible 14. Le caractère amovible des jupes 13, 13' autorise leur retrait de la zone médiane 12, pour permettre leur exploitation sélective selon la conformation de la chambre de confinement 2 à obtenir et pour faciliter la fabrication de la bâche 6.

Accessoirement, la bâche 6 est munie de moyens de fixation 15 de la coiffe 1 sur la surface à réparer. Les moyens de fixation 15 sont par exemple formés de bandes à griffes et boucles coopérant disposées en bordure de la bâche 6, tel qu'en bordure de sa zone médiane 12, voire encore en bordure de la ou des jupes 13, 13' qui la prolongent. Selon une forme avantageuse de réalisation, la face interne de la bâche 6 considérée comme prévue pour être en contact avec la surface à réparer est enduite d'une colle repositionnable, localement par un opérateur sur site.

L'exploitation d'une colle repositionnable ou analogue autorise une liberté de mise en conformation de la coiffe 1 et la fixation de la bâche 6 le long du pourtour de la zone à traiter, sans préjuger de la conformation de ce pourtour. A partir d'une même bâche 6 et en évitant une altération de la surface à réparer par les moyens de fixation 15, des coiffes 1 de diverses conformation peuvent être exploitées.

Par exemple, les coiffes 1 respectivement représentées sur les fig.1 et fig.3 sont chacune individuellement formées à partir d'une même bâche 6 intégrant une même ossature 7, notamment les bâche 6 et ossature 7 représentées sur la fig.2.

Plus particulièrement sur la fig.3, la mise en dépression progressive de l'ossature 7 permet à un état intermédiaire de rigidification de l'ossature 7, d'exploiter un caractère malléable de l'ossature 7 pour faciliter la mise en conformation de la coiffe 1, et plus particulièrement de la chambre de confinement 2, selon la conformation du pourtour de la zone à traiter. A l'état intermédiaire, un opérateur peut infléchir l'ossature 7, et notamment individuellement les éléments de tension 8, 8' qui la composent, pour adapter au mieux la conformation de la chambre de confinement 2 et de son débouché selon la conformation du pourtour de la surface à traiter.

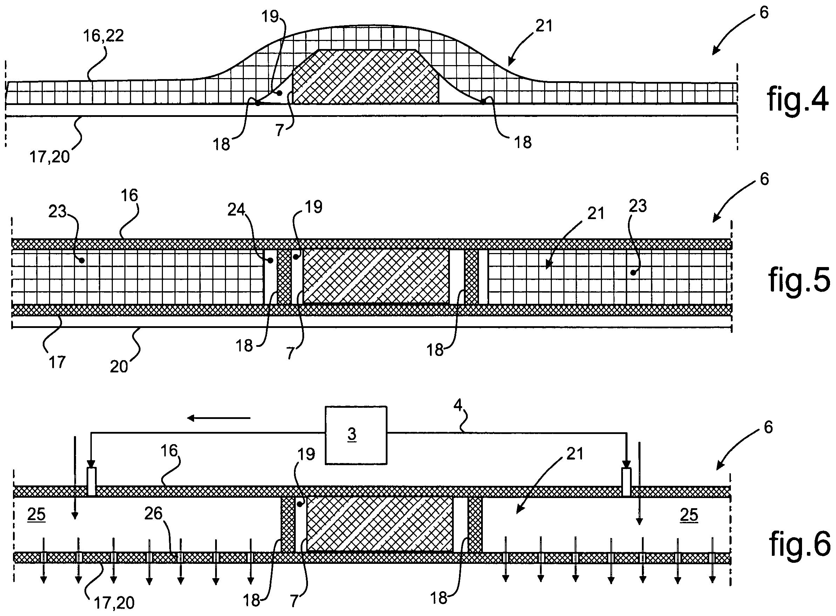

Sur les fig.4 à fig.6, la bâche 6 est formée de deux nappes 16, 17 scellées l'une à l'autre en superposition dans leur plan général. Des joints de fixation 18 ménagent une ou plusieurs poches 19 par scellement des nappes 16, 17 entre elles. La poche 19 est destinée à loger l'ossature 7, et plus particulièrement individuellement l'un des éléments de tension qui la composent.

La bâche 6 est munie d'une isolation thermique 21 et d'une couche thermiquement réfléchissante 20. L'isolation thermique 21 permet d'éviter les déperditions d'énergie entre la chambre de confinement recevant le fluide chaud et l'environnement extérieur de la coiffe. La couche thermiquement réfléchissante 20 est ménagée à la face interne de la bâche 6 destinée à être orientée vers la zone à traiter en station de travail de la coiffe.

La couche thermiquement réfléchissante 20 est susceptible de former l'une des nappes, tel que sur les exemples de réalisation illustrés, et notamment une nappe interne 17 de la bâche 6. La couche thermiquement réfléchissante 20 est par analogie encore susceptible d'être portée par une telle nappe interne 17, sur laquelle elle est fixée en superposition dans son plan général, par scellement notamment.

Sur la fig.4, l'isolation thermique 21 est formée d'une couche souple issue d'un matériau isolant. La couche de matériau isolant 22 est susceptible de former l'une des nappes, et notamment une nappe externe 16 de la bâche 6, tel que sur l'exemple de réalisation illustré. La couche de matériau isolant 22 est par analogie encore susceptible d'être portée par une telle nappe externe 16, sur laquelle elle est fixée en superposition dans son plan général, par scellement notamment.

Sur la fig.5, l'isolation thermique 21 est formée de corps 23 issus d'un matériau isolant et logés à l'intérieur d'alvéoles 24 que comporte la bâche 6 dans son épaisseur. De telles alvéoles 24 sont avantageusement ménagées entre les nappes 16, 17, en bordure des poches 19, à partir d'une exploitation des joints de fixation 18. Les alvéoles 24 sont susceptibles d'être ouvertes en bordure de la bâche 6, pour autoriser une installation et/ou inversement un retrait des corps 23 par un opérateur.

Sur la fig.6, l'isolation thermique 21 est formée à partir d'une ou de plusieurs enceintes 25 fermées, qui sont ménagées entre les nappes 16, 17. Les joints de fixation 18 des nappes 16, 17 entre elles sont mis à profit pour délimiter non seulement les poches 19, mais aussi de telles enceintes 25. L'une des nappes, et plus particulièrement la nappe interne 17, comportent des évents 26 de mise en communication aéraulique avec l'environnement extérieur, du volume intérieur de la bâche 6 délimité entre les nappes 16, 17.

L'enceinte 25 est en communication aéraulique avec le premier circuit aéraulique 4 de mise en relation fluidique entre la bâche 6 et la source de ventilation 3 du fluide chaud. L'amenée du fluide chaud à l'intérieur de la chambre de confinement en position de travail de la coiffe est avantageusement réalisée par l'intermédiaire de l'enceinte 25. L'enceinte 25 forme non seulement l'isolation thermique 21, mais aussi un canal d'amenée du fluide chaud depuis le premier circuit aéraulique 4 vers l'intérieur de la chambre de confinement.

Sur la fig.7, l'appareil comprend une pluralité de modules 27, 28 qui comportent chacun une coiffe 1. Les coiffes 1 que comportent respectivement les modules 27, 28 sont chacune issues d'une bâche intégrant une ossature. Sur l'exemple de réalisation illustré, les coiffes 1 sont de conformations respectives analogues. Il est cependant avantageusement possible d'exploiter des modules 27, 28 dont les coiffes 1 respectives délimitent des chambres de confinement de conformations différentes de l'une à l'autre des coiffes 1. La faculté propre de mise en conformation des chambres de confinement de l'une à l'autre des coiffes 1, est exploitée pour permettre de ménager une chambre de confinement globale de forme complexe et/ou de dimensions conséquentes.

Les coiffes 1 sont aboutées entre elles. Les bâches à partir desquelles sont respectivement formées les coiffes 1 sont équipées de moyens de jonction aéraulique de l'une à l'autre des coiffes 1.

Des premiers moyens de jonction aéraulique 29 permettent une mise en communication entre elles des poches 19 que comportent respectivement les bâches. Une source génératrice de dépression 9 commune à chacune des coiffes 1 permet de rigidifier l'une et l'autre des ossatures que comprennent respectivement les coiffes 1. La poche 19 de l'une des coiffes 1 est en communication fluidique avec le deuxième circuit aéraulique 10 et avec la poche 19 de l'autre coiffe 1 par l'intermédiaire des premiers moyens de jonction aéraulique 29. La valve 11 de raccordement qui équipe les bâches est susceptible d'être mise à profit pour former les premiers moyens de jonction aéraulique 29.

Des deuxièmes moyens de jonction aéraulique permettent une mise en communication entre elles des chambres de confinement 2 respectivement ménagées par les coiffes 1. Les jupes amovibles voisines de l'une à l'autre des bâches sont retirées, pour autoriser une libre circulation du fluide chaud de l'une à l'autre des coiffes 1, à partir de l'exploitation d'une source de ventilation 3 d'air chaud commune de l'un à l'autre des modules 27, 28.

La libre circulation du fluide chaud de l'une à l'autre des coiffes 1 est effectuée à travers une ouverture latérale 30 des coiffes 1 de dimensions conséquentes. Ladite ouverture latérale 30 est normalement obturée par les jupes correspondantes préalablement à leur retrait. L'extension de l'ouverture latérale 30 correspond notamment à l'extension des coiffes 1 dans leur zone d'aboutement, l'ouverture latérale 30 des coiffes 1 formant avantageusement les deuxièmes moyens de jonction aéraulique. Les moyens d'assemblage facilement réversible des jupes à la zone médiane des bâches qui leur sont respectivement affectées, sont mis à profit pour procurer un aboutement étanche entre elles des coiffes 1 de l'un à l'autre des modules 27, 28.

## Revendications

1. Appareil de chauffage localisé d'une surface à réparer en matériau polymère par ventilation d'un fluide chaud à l'intérieur d'une chambre de confinement (2) d'une zone à traiter, l'appareil comprenant au moins une coiffe (1) déformable délimitant la chambre de confinement (2) en ménageant au moins un débouché (5) de la chambre de confinement (2) vers l'extérieur de la coiffe, la paroi périphérique étant en communication aéraulique avec une source de ventilation (3) d'un fluide porté à température et étant déformable entre deux stations de la coiffe (1), dont une station naturelle de repos dans laquelle la coiffe est de conformation spontanée et une station de travail dans laquelle la coiffe délimite le volume de la chambre de confinement (2) en étant placée sous contrainte à partir de la mise en oeuvre sélective de moyens générateurs d'effort (9) que comprend l'appareil,
**caractérisé en ce que** la coiffe est formée d'une bâche (6) globalement plane intégrant dans son plan général une ossature (7) de mise en conformation de la chambre de confinement (2) sous l'effet de tensions appliquées localement par l'ossature (7) sur la bâche (6) dans son plan général (P), l'ossature (7) étant à changement d'état entre un état passif dans lequel la bâche (6) et l'ossature (7) qu'elle intègre sont spontanément plans, et un état actif dans lequel l'ossature (7) est soumise à déformation par les dits moyens générateurs d'effort (9) et applique lesdites tensions localisées sur la bâche (6)

2. Appareil selon la revendication 1,
**caractérisé en ce que** l'ossature (7) est souple à l'état passif et est rigidifiée à l'état actif par les moyens générateurs d'effort (9) qui induisent un changement de forme de l'ossature (7) entre son état passif et son état actif.

3. Appareil selon la revendication 2,
**caractérisé en ce que** les moyens générateurs d'effort (9) induisent un changement progressif de forme de l'ossature (7) entre l'état passif et un état actif optimal dans lequel l'ossature (7) est rigide, l'ossature (7) étant malléable à un état intermédiaire entre l'état passif et l'état actif optimal.

4. Appareil selon l'une quelconque des revendications précédentes,
**caractérisé en ce que** l'ossature (7) est logée à l'intérieur d'au moins une poche (19) fermée ménagée dans la bâche (6), et est formée d'au moins un élément de tension (8, 8') issu d'un corps en matériau alvéolaire à cellules ouvertes communicantes, les moyens générateurs d'effort (9) étant formés de moyens générateurs d'une dépression à l'intérieur de la poche (19).

5. Appareil selon la revendication 4,
**caractérisé en ce que** l'élément de tension (8, 8') est formé d'une bande issue d'un feutre dont les fibres ménagent entre elles les dites cellules.

6. Appareil selon l'une quelconque des revendications 4 et 5,
**caractérisé en ce que** l'ossature (7) est formée d'une pluralité d'éléments de tension (8, 8') allongés concourants qui s'étendent chacun en travers de la bâche (6) entre au moins deux de ses bords opposés.

7. Appareil selon l'une quelconque des revendications 4 à 6,
**caractérisé en ce que** la bâche (6) est au moins composée de deux nappes (16, 17) fixées l'une à l'autre en superposition dans leur plan général par l'intermédiaire de joints de fixation (18) des nappes (16, 17) entre elles, des dits joints de fixation (18) ménageant les poches (19) entre eux et entre les nappes (16, 17).

8. Appareil selon l'une quelconque des revendications précédentes,
**caractérisé en ce que** la bâche (6) est pourvue d'une isolation thermique (21) de l'une à l'autre de ses grandes faces définies par le plan général (P) de la bâche (6).

9. Appareil selon la revendication 8,
**caractérisé en ce que** l'isolation thermique (21) comprend au moins une couche souple (22) de matériau isolant flexible intégrée à l'une quelconque au moins des grandes faces de la bâche (6).

10. Appareil selon l'une quelconque des revendications 8 et 9,
**caractérisé en ce que** l'isolation thermique (21) comprend au moins un corps (23) issu d'un matériau isolant et logé à l'intérieur d'au moins une alvéole (24) que comporte la bâche (6).

11. Appareil selon la revendication 10,
**caractérisé en ce que** l'alvéole (24) est ménagée entre les deux dites nappes (16, 17) en bordure de la poche (19).

12. Appareil selon l'une quelconque des revendications 8 à 11,
**caractérisé en ce que** l'isolation thermique (21) comprend au moins une enceinte (25) fermée ménagée entre les deux dites nappes (16, 17) et entre des dits joints de fixation (18), l'une des nappes (17) comportant des évents (26) débouchant à une grande face de la bâche (6), et l'enceinte (25) étant en communication aéraulique avec ladite source de ventilation (3) du fluide chaud.

13. Appareil selon l'une quelconque des revendications précédentes,
**caractérisé en ce que** la bâche (6) est pourvue à l'une de ses grandes faces d'une couche thermiquement réfléchissante (20).

14. Appareil selon l'une quelconque des revendications précédentes,
**caractérisé en ce que** la bâche (6) comporte au moins une jupe (13, 13') de prolongement de l'un au moins de ses bords, la bâche (6) intégrant l'ossature (7) dans une zone médiane (6) délimitant le volume de la chambre de confinement (2), la jupe (13, 13') prolongeant ladite zone médiane (6) en fermant la chambre de confinement (2) autour de son débouché (5) à l'état actif de l'ossature (7).

15. Appareil selon l'une quelconque des revendications précédentes,
**caractérisé en ce que** la bâche (6) est munie de moyens de fixation (15) à liaison facilement réversible ménagés au moins au débouché (5) de la chambre de confinement (2), les moyens de fixation (15) étant aptes à procurer une jonction étanche entre la bâche (6) et la surface à réparer.

16. Appareil selon l'une quelconque des revendications précédentes,
**caractérisé en ce que** l'appareil est composé d'une pluralité de modules (27, 28) chacun formés d'une coiffe (1), les bâches (6) formant respectivement les coiffes (1) respectives des modules (27, 28) étant munies de moyens de jonction aéraulique (29, 30) entre elles.

17. Appareil selon la revendication 16,
**caractérisé en ce que** les moyens de jonction aéraulique comprennent au moins des premiers moyens de jonction aéraulique (29) à travers lesquels circule l'air de l'une à l'autre des poches (19) que comportent les bâches (6) formant les coiffes (1) respectives des modules (27, 28).

## Patentansprüche

1. Gerät zum örtlich begrenzten Beheizen einer zu reparierenden Oberfläche aus Polymermaterial durch Belüftung eines zu behandelnden Bereichs im Inneren einer Isolierkammer (2) mit einem heißen Fluid, wobei das Gerät mindestens eine verformbare Haube (1) aufweist, die die Isolierkammer (2) eingrenzt unter Bildung mindestens eines Ausgangs (5) der Isolierkammer (2) aus der Haube heraus, wobei die Umfangswandung in Luftverbindung mit einer Belüftungsquelle (3) mit einem temperierten Fluid steht und verformbar ist zwischen zwei Stellungen der Haube (1), einer natürlichen Ruhestellung, in der die Haube von sich aus geformt ist, und einer Arbeitsstellung, in der die Haube das Volumen der Isolierkammer (2) eingrenzt und ausgehend von der selektiven Inbetriebnahme von Krafterzeugungsmitteln (9), die das Gerät aufweist, unter Spannung gesetzt wird,
**dadurch gekennzeichnet, dass** die Haube aus einer im Wesentlichen ebenen Plane (6) geformt ist, die in ihrer Hauptebene eine Tragkonstruktion (7) zur Formgebung der Isolierkammer (2) unter Einwirkung von durch die Tragkonstruktion (7) auf die Plane (6) in ihrer Hauptebene (P) örtlich angelegten Spannungen einbindet, wobei die Tragkonstruktion (7) ihren Zustand ändert zwischen einem passiven Zustand, in dem die Plane (6) und die Tragkonstruktion (7), die sie umfasst, von sich aus eben sind, und einem aktiven Zustand, in dem die Tragkonstruktion (7) durch die Krafterzeugungsmittel (9) einer Verformung ausgesetzt ist und örtliche Spannungen auf die Plane (6) überträgt.

2. Gerät nach Anspruch 1,
**dadurch gekennzeichnet, dass** die Tragkonstruktion (7) im passivem Zustand weich ist und im aktiven Zustand durch die Krafterzeugungsmittel (9), die zu einer Änderung der Form der Tragkonstruktion (7) zwischen ihrem passiven und ihrem aktiven Zustand führen, versteift wird.

3. Gerät nach Anspruch 2,
**dadurch gekennzeichnet, dass** die Krafterzeugungsmittel (9) zu einer fortschreitenden Änderung der Form der Tragkonstruktion (7) zwischen dem passiven Zustand und einem optimalen aktiven Zustand, in dem die Tragkonstruktion (7) steif ist, führen, wobei die Tragkonstruktion (7) in einem Zwischenzustand zwischen dem passiven und dem optimalen aktiven Zustand verformbar ist.

4. Gerät nach einem der vorstehenden Ansprüche,
**dadurch gekennzeichnet, dass** die Tragkonstruktion (7) im Inneren mindestens einer geschlossenen Tasche (19) untergebracht ist, die in der Plane (6) eingearbeitet ist und aus mindestens einem Spannungselement (8, 8') geformt ist, das aus einem Körper aus einem Stoff mit bienenwabenartiger Struktur mit offenen miteinander verbundenen Zellen hervorgeht, wobei die Krafterzeugungsmittel (9) aus Mitteln gebildet sind, die im Inneren der Tasche (19) einen Unterdruck erzeugen.

5. Gerät nach Anspruch 4,
**dadurch gekennzeichnet, dass** das Spannungselement (8, 8') aus einem Band gebildet wird, das aus einem Filz hervorgeht, dessen Fasern untereinander die Zellen bilden.

6. Gerät nach einem der Ansprüche 4 und 5,
**dadurch gekennzeichnet, dass** die Tragkonstruktion (7) aus einer Mehrzahl von länglichen Spannungselementen (8, 8') gebildet wird, die parallel zueinander verlaufen und jeweils durch die Plane (6) zwischen mindestens zwei ihrer gegenüberliegenden Ränder verlaufen.

7. Gerät nach einem der Ansprüche 4 bis 6,
**dadurch gekennzeichnet, dass** die Plane (6) aus mindestens zwei Schichten (16, 17) besteht, die in ihrer Hauptebene überlappend aneinander befestigt sind durch Befestigungsverbindungen (18) der Schichten (16, 17), wobei die Befestigungsverbindungen (18) zwischen sich und den Schichten (16, 17) die Taschen (19) bilden.

8. Gerät nach einem der vorstehenden Ansprüche,
**dadurch gekennzeichnet, dass** die Plane (6) mit einer thermischen Isolierung (21) von einer zu der anderen ihrer großen Frontseiten, die durch die Hauptebene (P) der Plane (6) definiert sind, versehen ist.

9. Gerät nach Anspruch 8,
**dadurch gekennzeichnet, dass** die thermische Isolierung (21) mindestens eine weiche Schicht (22) aus flexiblem Isoliermaterial aufweist, das in mindestens eine der großen Frontseiten der Plane (6) integriert ist.

10. Gerät nach einem der Ansprüche 8 und 9,
**dadurch gekennzeichnet, dass** die thermische Isolierung (21) mindestens einen Körper (23) aufweist, der aus einem Isoliermaterial hervorgeht und im Inneren mindestens einer Wabe (24), die die Plane (6) aufweist, angeordnet ist.

11. Gerät nach Anspruch 10,
**dadurch gekennzeichnet, dass** die Wabe (24) zwischen den beiden Schichten (16, 17) an der Kante der Tasche (19) angeordnet ist.

12. Gerät nach einem der Ansprüche 8 bis 11,
**dadurch gekennzeichnet, dass** die thermische Isolierung (21) mindestens einen abgeschlossenen Raum (25) aufweist, der zwischen den beiden Schichten (16, 17) und zwischen den Befestigungsverbindungen (18) ausgebildet ist, wobei eine der Schichten (17) Lüftungsöffnungen (26) aufweist, die in einer großen Frontseite der Plane (6) münden, und der abgeschlossene Raum (25) in Luftverbindung mit der Zufuhr (3) des heißen Fluids steht.

13. Gerät nach einem der vorstehenden Ansprüche,
**dadurch gekennzeichnet, dass** die Plane (6) auf einer ihrer großen Frontseiten mit einer wärmereflektierenden Schicht (20) versehen ist.

14. Gerät nach einem der vorstehenden Ansprüche,
**dadurch gekennzeichnet, dass** die Plane (6) mindestens eine Schürze (13, 13') aufweist zur Verlängerung mindestens einer ihrer Kanten, wobei die Plane (6) die Tragkonstruktion (7) in einem mittleren Bereich (6) integriert, der das Volumen der Isolierkammer (2) eingrenzt, wobei die Schürze (13, 13') den mittleren Bereich (6) verlängert, indem sie die Isolierkammer (2) um ihren Ausgang (5) im aktiven Zustand der Tragkonstruktion (7) schließt.

15. Gerät nach einem der vorstehenden Ansprüche,
**dadurch gekennzeichnet, dass** die Plane (6) mit Befestigungsmitteln (15) mit leicht lösbarer Verbindung versehen ist, die mindestens am Ausgang (5) der Isolierkammer (2) angeordnet sind, wobei die Befestigungsmittel (15) eine dichte Verbindung zwischen der Plane (6) und der zu reparierenden Oberfläche herstellen können.

16. Gerät nach einem der vorstehenden Ansprüche,
**dadurch gekennzeichnet, dass** das Gerät aus einer Mehrzahl von Modulen (27, 28) zusammengesetzt ist, die jeweils aus einer Haube (1) gebildet sind, wobei die Planen (6) jeweils die jeweiligen Hauben (1) der Module (27, 28) bilden und mit Mitteln (29, 30) zur Luftverbindung untereinander versehen sind.

17. Gerät nach Anspruch 16,
**dadurch gekennzeichnet, dass** die Luftverbindungsmittel mindestens erste Luftverbindungsmittel (29) aufweisen, durch die Luft von einer der Taschen (19) in eine andere strömt, die die Planen (6) aufweisen, die die jeweiligen Hauben (1) der Module (27, 28) bilden.

## Claims

1. Apparatus for localised heating of a polymer material surface to be repaired by ventilation of a hot fluid inside a confinement chamber (2) for confining a zone to be treated, the apparatus comprising at least one deformable cap (1) delimiting the confinement chamber (2) while providing at least one outlet (5) from the confinement chamber (2) towards the outside of the cap, the peripheral wall being in aeraulic communication with a source of ventilation (3) of a raised temperature fluid and being deformable between two stations of the cap (1), including a natural resting station in which the cap is of spontaneous conformation and a working station in which the cap delimits the volume of the confinement chamber (2) by being placed under stress from selective implementation of force generator means (9) comprised by the apparatus,
**characterised in that** the cap is formed of a generally plane blanket (6) incorporating in its general plane a framework (7) for conformation of the confinement chamber (2) under the effect of tensions applied locally by the framework (7) on the blanket (6) in its general plane (P), the framework (7) being able to change state between a passive state in which the blanket (6) and the framework (7) which it incorporates are spontaneously plane, and an active state in which the framework (7) is subjected to deformation by said force generator means (9) and applies said localised tensions to the blanket (6).

2. Apparatus according to claim 1,
**characterised in that** the framework (7) is supple in the passive state and is stiffened in the active state by the force generator means (9) which induce a change of shape of the framework (7) between its passive state and its active state.

3. Apparatus according to claim 2,
**characterised in that** the force generator means (9) induce a progressive change of shape of the framework (7) between the passive state and an optimum active state in which the framework (7) is rigid, the framework (7) being malleable at an intermediate state between the passive state and the optimum active state.

4. Apparatus according to any one of the preceding claims,
**characterised in that** the framework (7) is housed inside at least one closed pouch (19) arranged in the blanket (6), and is formed of at least one tension element (8, 8') derived from a body of cellular material having communicating open cells, the force generator means (9) being formed of means for generating negative pressure inside the pouch (19).

5. Apparatus according to claim 4,
**characterised in that** the tension element (8, 8') is formed of a strip derived from a felt whose fibres arrange said cells between them.

6. Apparatus according to any one of claims 4 and 5,
**characterised in that** the framework (7) is formed of a plurality of concurrent elongate tension elements (8, 8') which each extend across the blanket (6) between at least two of its opposite edges.

7. Apparatus according to any one of claims 4 to 6,
**characterised in that** the blanket (6) is at least composed of two covers (16, 17) fastened to one another in superposition in their general plane by means of fastening joints (18) for fastening the covers (16, 17) to one another, said fastening joints (18) arranging the pouches (19) between one another and between the covers (16, 17).

8. Apparatus according to any one of the preceding claims,
**characterised in that** the blanket (6) is provided with thermal insulation (21) from one to the other its large faces defined by the general plane (P) of the blanket (6).

9. Apparatus according to claim 8,
**characterised in that** the thermal insulation (21) comprises at least one supple layer (22) of flexible insulating material incorporated in any one at least of the large faces of the blanket (6).

10. Apparatus according to any one of claims 8 and 9,
**characterised in that** the thermal insulation (21) comprises at least one body (23) derived from an insulating material and housed inside at least one cell (24) comprised by the blanket (6).

11. Apparatus according to claim 10,
**characterised in that** the cell (24) is arranged between the two said covers (16, 17) at the margin of the pouch (19).

12. Apparatus according to any one of claims 8 to 11,
**characterised in that** the thermal insulation (21) comprises at least one closed enclosure (25) arranged between the two said covers (16, 17) and between said fastening joints (18), one of the covers (17) comprising vents (26) opening out onto a large face of the blanket (6), and the enclosure (25) being in aeraulic communication with said source of ventilation (3) of the hot fluid.

13. Apparatus according to any one of the preceding claims,
**characterised in that** the blanket (6) is provided on one of its large faces with a thermally reflecting layer (20).

14. Apparatus according to any one of the preceding claims,
**characterised in that** the blanket (6) comprises at least one skirt (13, 13') for extending at least one of its edges, the blanket (6) incorporating the framework (7) in a middle zone (6) delimiting the volume of the confinement chamber (2), the skirt (13, 13') extending said middle zone (6) while closing the confinement chamber (2) around its outlet (5) in the active state of the framework (17).

15. Apparatus according to any one of the preceding claims,
**characterised in that** the blanket (6) is provided with easily reversible fastening means (15) arranged at least at the outlet (5) of the confinement chamber (2), the fastening means (15) being suitable for providing a leak-tight junction between the blanket (6) and the surface to be repaired.

16. Apparatus according to any one of the preceding claims,
**characterised in that** the apparatus is composed of a plurality of modules (27, 28) each formed by a cap (1), the blankets (6) forming respectively the respective caps (1) of the modules (27, 28) being provided with aeraulic junction means (29, 30) between one another.

17. Apparatus according to claim 16,
**characterised in that** the aeraulic junction means comprise at least first aeraulic junction means (29) through which air flows from one to the other of the pouches (19) comprised by the blankets (6) forming the respective caps (1) of the modules (27, 28).
